# FASCICULE DE BREVET EUROPEEN

(11) **EP 2 783 777 B1**
(45) Date de publication et mention de la délivrance du brevet: **16.11.2016**
(21) Numéro de dépôt: 14161655.7
(22) Date de dépôt: 26.03.2014
(51) Int. Cl.: B23B 35/00, B23B 39/04, B23B 39/16, B23B 39/24, B23Q 1/70, F02C 7/045

(54) **Dispositif de percage et procédé de percage utilisant un tel dispositif de percage**
Bohrvorrichtung und Bohrverfahren, bei dem diese Bohrvorrichtung verwendet wird
Drilling device and drilling method using such a drilling device

(30) Priorité: 27.03.2013 FR 1352782
(43) Date de publication de la demande: 01.10.2014
(73) Titulaire: Le Creneau Industriel, 74940 Annecy Le Vieux (FR)
(72) Inventeur: Basso, Dominique, 74940 ANNECY LE VIEUX (FR); Combaz, Laurent, 74940 ANNECY LE VIEUX (FR); Pietryka, Alain, 74000 ANNECY (FR); Rollinger, Claude, 74940 ANNECY LE VIEUX (FR)
(74) Mandataire: Cabinet Poncet

(56) Documents cités:
- DE-A1- 2 801 305
- DE-A1- 19 636 491
- FR-A1- 2 643 004
- FR-A1- 2 684 907
- FR-A1- 2 927 271
- US-A- 5 147 160
- US-A1- 2012 189 394

## Description

La présente invention concerne un dispositif de perçage selon le préambule de la revendication 1, pour le perçage d'une plaque, et notamment pour le perçage des pièces de protection acoustique entrant dans la composition des nacelles de réacteur des aéronefs.

La présente invention concerne aussi un procédé de perçage et un procédé de fabrication utilisant ce dispositif de perçage. Un tel dispositif de perçage, et de tels procédés de perçage et de fabrication, sont connus du document US 2012/0189394 A1.

Afin d'améliorer les performances acoustiques des aéronefs, les nacelles de réacteur sont dotées de plaques acoustiques visant à atténuer les bruits générés par les réacteurs. Pour ce faire, les plaques acoustiques comportent habituellement une ou plusieurs couches de structures à âme alvéolaire, du type nid d'abeille. Les couches de structures à âme alvéolaire sont généralement revêtues sur leurs faces interne et externe de peaux en forme de plaques acoustiques présentant une multitude de trous de petit diamètre, répartis de façon à procurer un effet d'absorption acoustique des bruits générés par les réacteurs. Ces trous sont généralement réalisés par perçage, afin de garantir la précision nécessaire à l'absorption acoustique efficace.

Dans le cas de la fabrication d'une telle plaque, celle-ci ne peut être perforée qu'après avoir été mise en forme préalablement. Il en résulte que la plaque présente une surface de forme concave, convexe ou complexe (avec des zones concaves et des zones convexes).

Pour parvenir à une absorption acoustique optimale, il est nécessaire que les axes des trous réalisés dans la plaque soient orientés de façon sensiblement perpendiculaire à la surface de la plaque.

Pour diminuer le temps nécessaire à la réalisation des trous, le document FR 2 643 004 A1 propose un outillage à platine porte-outils munie d'une pluralité de broches de perçage rotatives à forets, lesdites broches de perçage étant orientées selon des directions de perçage parallèles à une direction moyenne de perçage. Cet outillage peut être utilisé lors d'un cycle de perçage industriel d'une plaque par un déplacement automatisé tel que celui décrit dans le document FR 2 927 271 A1 par exemple.

Dans cet outillage, les broches de perçage sont fixées et immobiles sur la platine porte-outils, et les extrémités des forets sont dans un même plan. Ainsi, du fait de la forme gauche de la surface de la plaque, l'orientation de certaines broches rotatives de perçage perpendiculairement à la surface de la plaque implique que d'autres broches rotatives de perçage ne sont pas perpendiculaires à la surface de la plaque.

En outre, les extrémités des forets sont situées à des distances différentes de leur point de début de perçage de la surface de la plaque. Dans le cas où un perçage traversant est recherché, il convient de générer un déplacement de la platine porte-outils selon une course déterminée notamment par l'épaisseur de la plaque et par la distance entre l'extrémité du foret le plus éloigné de son point de début de perçage. On s'assure ainsi que le foret dont l'extrémité est la plus éloignée de son début de point de perçage traverse la plaque de part en part. Ceci implique également l'utilisation de forets de longueur suffisante pour que, malgré les disparités de position relative des forets résultant de la courbure de la surface de la plaque, celle-ci soit toujours percée de part en part par les forets.

L'outillage du document FR 2 643 004 A1 présente ainsi l'inconvénient d'allonger considérablement le temps de cycle de perçage, la platine porte-outils devant être avancée puis retirée selon des courses d'amplitude augmentée.

En outre, dans le cas d'une plaque à couches alvéolées, l'utilisation de forets de longueur augmentée conduit à faire pénétrer certains forets dans les couches alvéolées et selon des directions inclinées par rapport à la normale à la surface de la plaque. Ces perçages excessifs risquent de détériorer la structure alvéolée des couches de la plaque, diminuent les performances d'absorption acoustique, et diminuent la résistance de liaison assurée entre les peux interne et externe par les couches de structures à âme alvéolaire.

Une autre solution consiste à utiliser une platine porte-outils présentant une courbure concave ou une courbure convexe correspondant à la courbure locale de la plaque à percer. Les extrémités des forets ne sont pas dans un même plan mais suivent une courbure correspondant à la courbure locale de la plaque à percer.

Une telle solution oblige cependant à utiliser une multitude de platines porte-outils ayant des courbures concaves de différents rayons et une multitude de platines porte-outils ayant des courbures convexes de différents rayons.

L'utilisation d'une pluralité de platines porte-outils augmente considérablement le coût de l'outillage et oblige à procéder à des changements de platines au cours du cycle de perçage, ce qui allonge inéluctablement celui-ci.

En outre, cela rend complexe l'automatisation du déplacement des platines porte-outils selon un trajet optimisé en temps et en qualité de perçage (perpendicularité notamment).

Enfin, dans la première ou la deuxième solution exposées ci-dessus, la plaque présente la plupart du temps des zones à ne pas percer. Avec la platine du document FR 2 643 004 A1, il est difficile de suivre rapidement et de façon précise les contours des zones à ne pas percer. Pour pallier cet inconvénient, une solution consiste à briser un ou plusieurs forets situés en périphérie de la platine porte-outils. On confère ainsi à la platine porte-outils une géométrie de perçage dimensionnellement plus réduite et donc utilisable plus finement pour contourner les zones à ne pas percer. Mais le bris de ces forets diminue la capacité horaire de perçage de la platine porte-outils, de sorte que le contournement des zones à ne pas percer doit être envisagé en fin de perçage de la plaque, ce qui complique l'élaboration et l'optimisation d'un trajet déjà complexe de la platine porte-outils au regard de la plaque pour la réalisation du cycle de perçage.

Les documents US 2012/0189394 A1 et DE 196 36 491 A1 décrivent un dispositif de perçage comportant une platine porte-outils munie d'au moins une broche de perçage qui est déplaçable en translation selon sa direction de perçage par rapport à la platine porte-outils par des moyens pneumatiques. Ladite broche de perçage est ainsi déplaçable entre seulement deux positions, à savoir une position de déploiement, dans laquelle la broche de perçage est disposée par rapport au porte-outils de façon à réaliser un perçage dans une plaque, et une position de retrait, dans laquelle la broche de perçage est disposée par rapport au porte-outils de façon à empêcher la réalisation d'un perçage dans ladite plaque.

Le document DE 28 01 305 A1 décrit une tête multibroche pour le perçage. Les broches sont hydrauliques, c'est-à-dire entraînée en rotation par la circulation d'un fluide. Lorsque la pression du fluide devient trop forte dans la broche, l'arbre d'entraînement de la broche est déplacé en translation selon la direction de perçage de la broche de façon à provoquer une fuite du fluide hors de la broche et à limiter ainsi la pression du fluide dans la broche.

Le document US 5,147,160 A décrit quant à lui un dispositif de perçage d'une pluralité de trous dans une plaque, ledit dispositif étant muni d'un système de changement automatique des forets.

Un problème proposé par l'invention est de concevoir un dispositif de perçage permettant un perçage rapide de la plaque à percer.

Simultanément, l'invention vise à concevoir un dispositif de perçage permettant de fiabiliser le perçage d'une plaque présentant une surface à courbures prononcées et/ou des zones à ne pas percer.

Pour atteindre ces objets ainsi que d'autres, l'invention propose un dispositif de perçage selon la revendication 1 pour le perçage d'une plaque, comportant une platine porte-outils munie d'une pluralité de broches de perçage rotatives à forets orientées selon des directions de perçage parallèles à une direction moyenne de perçage, lesdites broches de perçage étant réparties à intervalle constant sur la platine porte-outils au moins selon une première direction transversale pour former au moins un arrangement linéaire de broches de perçage, le dispositif de perçage comportant des moyens pilotés de déplacement individuel par rapport à la platine porte-outils de chacune des broches de perçage rotatives selon leur direction de perçage respective ; selon l'invention, les moyens pilotés de déplacement individuel comportent des actionneurs linéaires à positionnement continu.

Un tel dispositif de perçage permet de positionner les broches de perçage sur la platine porte-outils de façon à reproduire, avec une unique platine porte-outils, la courbure particulière de la pièce en chaque zone à percer, et ce à chaque déplacement de la platine porte-outils. On peut ainsi utiliser des forets d'une même longueur réduite pour limiter les temps d'approche et de retrait de la platine porte-outils, tout en étant sûr que le foret traversera la plaque à percer de part en part (ou selon une profondeur minimale déterminée) et sans excès pour une même course de déplacement de la platine porte-outils ou pour une course de déplacement de chacune des broches de perçage pendant un même temps.

Si un foret présente un angle d'incidence trop élevé par rapport à la normale de la surface de la plaque, la broche de perçage portant ce foret peut être rétractée de façon à ne pas venir percer la plaque.

De la même façon, si un foret se situe face à une zone à ne pas percer de la plaque, la broche de perçage portant ce foret peut être rétractée de façon à ne pas venir percer la plaque. Le foret pourra cependant être utilisé à nouveau pour un perçage lors d'un positionnement ultérieur de la platine porte-outils au regard d'une autre zone de la plaque.

Les moyens pilotés de déplacement individuel permettent d'automatiser les positions axiales des broches de perçage par rapport à la platine porte-outils au cours d'un déplacement automatisé de la platine porte-outils au regard de la plaque à percer. Et les actionneurs à positionnement continu permettent de fixer de façon fiable la position axiale de chaque foret, et d'amener chacun des forets en une multitude de positions axiales précises par un déplacement axial continu des broches de perçage rotatives.

De préférence, le dispositif de perçage peut comporter une pluralité d'arrangements linéaires de broches de perçage, déportés les uns par rapport aux autres à intervalle constant sur la platine porte-outils selon une seconde direction transversale. On dispose ainsi d'une matrice de perçage bidimensionnelle pour aller encore plus vite dans le perçage de la totalité de la surface à percer, en déplaçant le dispositif de perçage selon un canevas ou chemin calculé pour optimiser les déplacements du dispositif de perçage par rapport aux zones à percer de la plaque.

Avantageusement, les actionneurs linéaires à positionnement continu peuvent être des moteurs électriques linéaires ou des vérins électriques. De tels actionneurs sont simples à contrôler.

De préférence, le dispositif de perçage peut comporter des moyens de surveillance de l'intensité du courant électrique consommé par chacune des broches de perçage. Les moyens de surveillance de l'intensité du courant d'alimentation des broches de perçage permettent de connaître le moment à partir duquel chaque foret commence à percer la plaque, et le moment auquel chaque foret a complètement traversé la plaque et auquel un retrait peut être commandé. Un retrait individuel de foret peut être opéré dès que ledit foret a traversé toute l'épaisseur de la plaque. En alternative, un retrait global de tous les forets peut être opéré seulement lorsque tous les forets ont traversé toute l'épaisseur de la plaque.

Avantageusement, le dispositif de perçage peut comporter des moyens de déplacement linéaire de la platine porte-outils selon la direction moyenne de perçage. On peut ainsi réaliser l'opération de perçage par un déplacement unique de la platine porte-outils, les broches rotatives de perçage restant immobiles par rapport à la platine porte-outils pendant cette étape de déplacement unique.

Selon un autre aspect, pour résoudre les problèmes précités, la présente invention propose un procédé de perçage selon la revendication 11 d'une plaque de forme gauche à l'aide d'un dispositif de perçage tel que décrit ci-dessus ; selon l'invention, le procédé comporte les étapes suivantes :
a) positionner la platine porte-outils au regard d'une zone déterminée de la plaque, de préférence avec la direction moyenne de perçage sensiblement perpendiculaire à ladite zone déterminée de la plaque,
b) déplacer par rapport à la platine porte-outils chacune des broches rotatives de perçage selon leur direction de perçage respective, de façon que l'extrémité de chaque foret soit située à une même distance de son point de début de perçage de la surface de la plaque,
c) percer la plaque par translation simultanée des forets selon leur direction de perçage respective.

Avantageusement, on prévoit que, entre les étapes a) et b), ou préalablement à l'étape a), on peut effectuer les étapes suivantes :
a1) fournir la forme géométrique de la surface de la plaque à percer à des moyens de calcul du dispositif de perçage,
a2) fournir aux moyens de calcul du dispositif de perçage la position de la plaque à percer dans un référentiel prédéterminé,
a3) fournir aux moyens de calcul du dispositif de perçage la position de la platine porte-outils dans le référentiel prédéterminé,
a4) calculer la position des points de début de perçage de chaque foret, situés à l'intersection des directions de perçage de chaque broche de perçage avec la surface de la plaque,
a5) à partir de la position de la platine porte-outils, de la position des broches de perçage sur la platine porte-outils, et de la position des points de début de perçage, calculer la distance séparant l'extrémité des forets de leur point de début de perçage.

Dans un mode de réalisation particulier de l'invention, on peut de préférence prévoir que :
- entre les étapes a) et b), ou préalablement à l'étape a), on effectue les étapes suivantes :
   1.1) fournir la forme géométrique de la surface de la plaque à percer à des moyens de calcul du dispositif de perçage, en identifiant les zones de la plaque à ne pas percer,
   1.2) fournir aux moyens de calcul du dispositif de perçage la position de la plaque à percer dans un référentiel prédéterminé,
   1.3) fournir aux moyens de calcul du dispositif de perçage la position de la platine porte-outils dans le référentiel prédéterminé,
   1.4) calculer la position des points de début de perçage de chaque foret, situés à l'intersection des directions de perçage de chaque broche de perçage avec la surface de la plaque,
   1.5) comparer les positions des points de début de perçage avec les zones à ne pas percer de la plaque et identifier les broches de perçage dont le foret a un point de début de perçage situé dans une zone à ne pas percer de la plaque,
   1.6) rétracter les broches de perçage dont le foret a un point de début de perçage situé dans une zone à ne pas percer de la plaque,
- seuls les forets non rétractés lors de l'étape 1.6) effectuent les étapes b) et c).

En alternative ou en complément, on peut avantageusement prévoir que :
- entre les étapes a) et b), ou préalablement à l'étape a), on effectue les étapes suivantes :
   2.1) fournir la forme géométrique de la surface de la plaque à percer à des moyens de calcul du dispositif de perçage,
   2.2) fournir aux moyens de calcul du dispositif de perçage la position de la plaque à percer dans un référentiel prédéterminé,
   2.3) fournir aux moyens de calcul du dispositif de perçage la position de la platine porte-outils dans le référentiel prédéterminé,
   2.4) calculer la position des points de début de perçage de chaque foret, situés à l'intersection des directions de perçage de chaque broche de perçage avec la surface de la plaque,
   2.5) calculer, en chacun des points de début de perçage, l'angle d'incidence des directions de perçage de chaque broche de perçage avec la surface de la plaque,
   2.6) comparer les angles d'incidence des directions de perçage des broches de perçage avec un angle limite prédéterminé,
   2.7) rétracter les broches de perçage dont l'angle d'incidence est supérieur à l'angle limite prédéterminé,
- seuls les forets non rétractés lors de l'étape 2.7) effectuent les étapes b) et c).

Avantageusement, lors de l'étape c), le perçage peut être réalisé par un déplacement individuel en translation de chacune des broches de perçage selon leur direction de perçage par rapport à la platine porte-outils.

En alternative, lors de l'étape c), le perçage peut être réalisé par un déplacement en translation de la platine porte-outils sur laquelle les broches de perçage sont maintenues fixes en position selon leur direction de perçage.

Selon un autre aspect de l'invention, il est proposé un procédé de fabrication selon la revendication 17 d'un panneau acoustique multi-couches, notamment pour une nacelle d'un aéronef, par un dispositif de perçage tel que décrit ci-dessus.

D'autres objets, caractéristiques et avantages de la présente invention ressortiront de la description suivante de modes de réalisation particuliers, faite en relation avec les figures jointes, parmi lesquelles :
- la figure 1 est une vue de face d'un premier mode de réalisation de dispositif de perçage selon l'invention ;
- la figure 2 est une vue de côté en coupe du dispositif de perçage de la figure 1 ;
- la figure 3 est une vue de face d'un deuxième mode de réalisation de dispositif de perçage selon l'invention ;
- la figure 4 est une vue en perspective du positionnement du dispositif de perçage de la figure 3 au regard d'une plaque à percer ;
- les figures 5, 7, 9 et 11 sont respectivement des vues de côté en coupe du dispositif de perçage de la figure 4 lors de son utilisation ;
- les figures 6, 8, 10 et 12 sont respectivement des vues de dessus en coupe du dispositif de perçage de la figure 4 lors de son utilisation ;
- les figures 13 et 14 sont des vues en perspective de deux porteurs automatisés numériques sur lesquels peut être porté le dispositif de perçage selon l'invention ; et
- la figure 15 est une vue de détail de la figure 5.

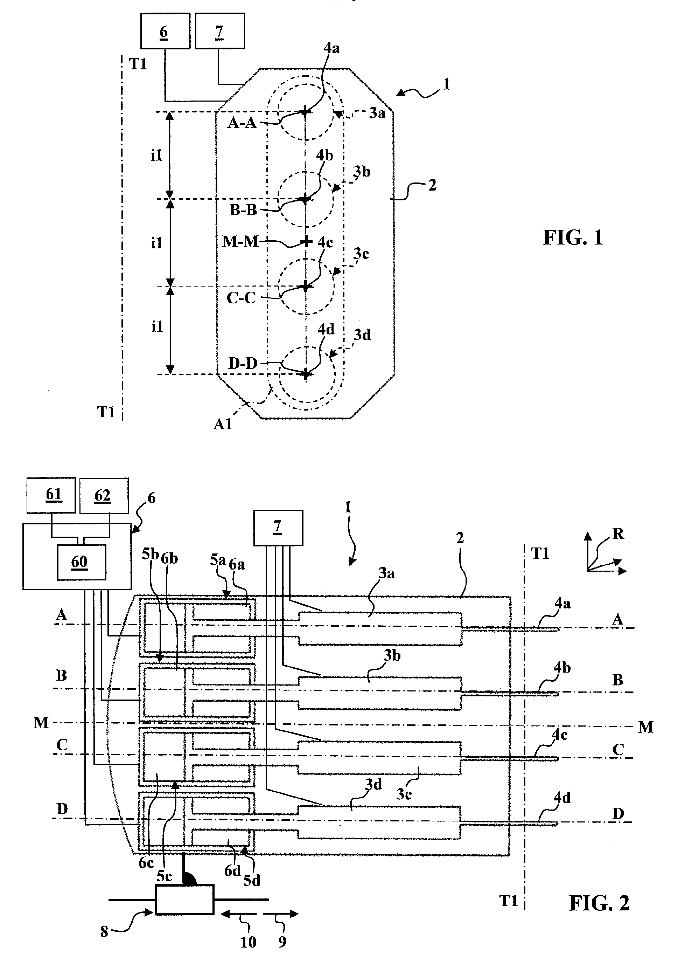

Sur les figures 1 et 2 est illustré à titre d'exemple un premier mode de réalisation d'un dispositif de perçage 1 selon l'invention.

Celui-ci comporte une platine porte-outils 2 munie d'une pluralité de broches de perçage 3a à 3d rotatives à forets 4a à 4d orientés selon des directions de perçage A-A à D-D parallèles à une direction moyenne de perçage M-M. Lesdites broches de perçage 3a à 3d sont réparties à intervalle constant i1 sur la platine porte-outils 2 selon une première direction transversale T1-T1 pour former un arrangement linéaire de broches de perçage A1. La direction moyenne de perçage M-M est définie comme la direction se trouvant sensiblement au centre du motif de perçage des forets 4a à 4d.

Le dispositif de perçage 1 comporte des moyens pilotés de déplacement individuel 5a à 5d, pilotés par des moyens de commande 6 pour déplacer axialement par rapport à la platine porte-outils 2 chacune des broches rotatives de perçage 3a à 3d selon leurs directions de perçage respectives A-A à D-D.

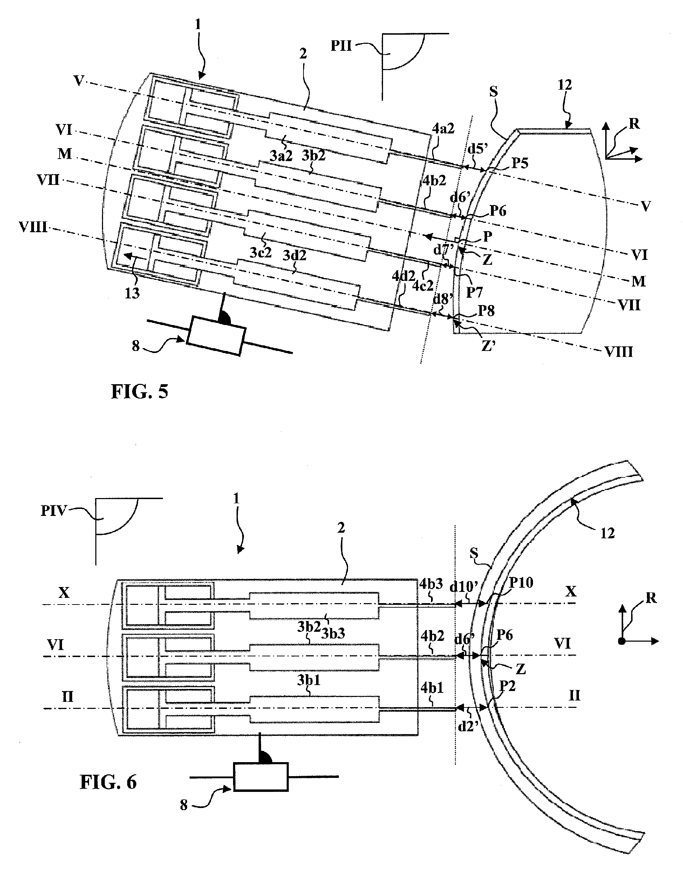

Pour piloter de façon automatique les moyens pilotés de déplacement individuels 5a à 5d, les moyens de commande 6 comprennent des moyens de calculs 60 qui sont reliés à des moyens d'acquisition de forme 61 aptes à mémoriser une image numérique de la forme de la surface S de la plaque 12 à percer, et à des moyens d'acquisition de position 62 aptes à mémoriser la position de la plaque 12 à percer dans un référentiel R prédéterminé (voir figures 2 et 5).

Les moyens d'acquisition de forme 61 peuvent notamment consister en des moyens de C.F.A.O. (Conception et Fabrication Assistées par Ordinateur) capables d'interpréter un fichier numérique représentatif de la forme de la plaque 12 à percer.

Les moyens d'acquisition de position 62 peuvent par exemple comprendre des moyens de palpeur déplaçables dans le référentiel R, qui est prédéterminé en ce qu'il est lié au dispositif de perçage 1. Les moyens de palpeur permettent de venir palper certains points de la plaque 12 à percer. En connaissant la forme de la plaque 12 à percer grâce aux moyens d'acquisition de forme 61 et la position des points palpés dans le référentiel R prédéterminé, on en déduit l'orientation de la plaque 12 à percer dans le référentiel R prédéterminé.

En alternative, les moyens d'acquisition de position 62 peuvent comprendre une platine de montage dont la position est connue avec précision dans le référentiel R, qui est prédéterminé en ce qu'il est lié au dispositif de perçage 1. La platine de montage reçoit la plaque 12 à percer dans une orientation unique. En connaissant l'orientation de la plaque 12 à percer par rapport à la platine de montage et la position de la platine de montage dans le référentiel R prédéterminé, on peut déduire la position de la plaque 12 à percer dans un référentiel R prédéterminé.

Les moyens pilotés de déplacement individuel 5a à 5d comportent des actionneurs linéaires à positionnement continu 6a à 6d qui sont ici des vérins électriques. En alternative, on peut utiliser des moteurs électriques linéaires.

Le dispositif de perçage 1 comporte également des moyens de surveillance 7 de l'intensité du courant électrique consommé par chacune des broches de perçage 3a à 3d.

Le dispositif de perçage 1 comporte également des moyens de déplacement linéaire 8 de la platine porte-outils 2 selon la direction moyenne de perçage M-M selon des mouvements de translation illustrés par les flèches 9 et 10.

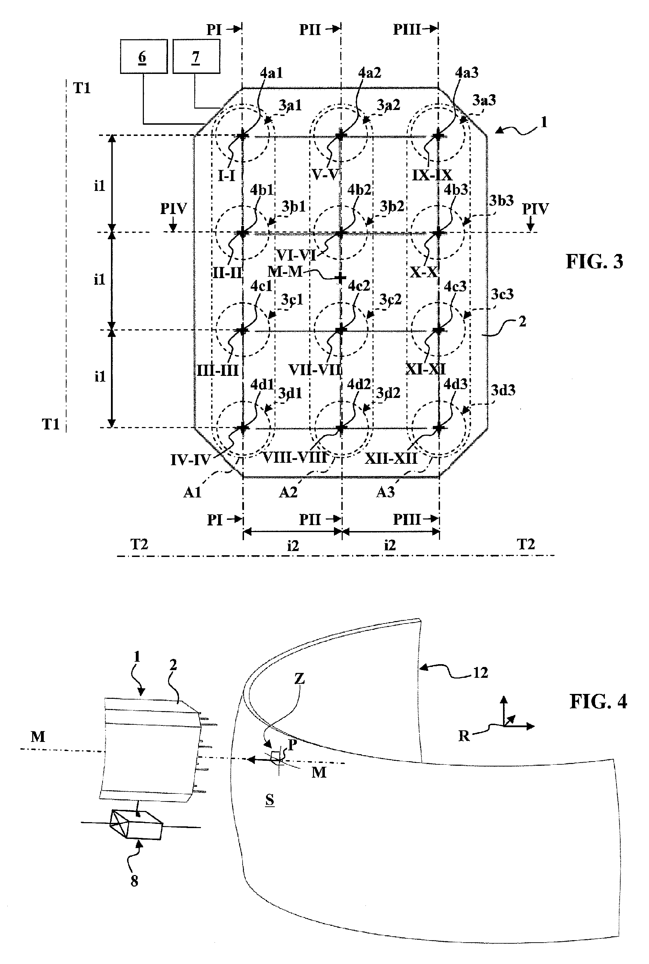

Un deuxième mode de réalisation particulier de dispositif de perçage 1 selon l'invention est illustré à titre d'exemple sur la figure 3. Ce dispositif de perçage 1 se distingue du dispositif de perçage 1 de la figure 1 en ce qu'il comporte trois arrangements linéaires de broches de perçage A1, A2 et A3, déportés les uns par rapport aux autres à intervalle constant i2 sur la platine porte-outils 2 selon une seconde direction transversale T2-T2.

En l'espèce, les intervalles i1 et i2 sont égaux, de façon à procurer une matrice (ou un motif) de perçage à maille carrée.

Les arrangements linéaires de broches de perçage A1, A2 et A3 sont respectivement contenus dans des plans PI, PII et PIII.

L'arrangement linéaire de broches de perçage A1 comporte quatre broches de perçage 3a1, 3b1, 3c1 et 3d1, réparties à intervalle constant i1 sur la platine porte-outils 2 selon la première direction transversale T1-T1, et portant respectivement des forets 4a1, 4b1, 4c1 et 4d1, orientés selon des directions respectives de perçage I-I à IV-IV.

L'arrangement linéaire de broches de perçage A2 comporte quatre broches de perçage 3a2, 3b2, 3c2 et 3d2, réparties à intervalle constant i1 sur la platine porte-outils 2 selon la première direction transversale T1-T1, et portant respectivement des forets 4a2, 4b2, 4c2 et 4d2, orientés selon des directions respectives de perçage V-V à VIII-VIII.

Enfin, l'arrangement linéaire de broches de perçage A3 comporte quatre broches de perçage 3a3, 3b3, 3c3 et 3d3, réparties à intervalle constant i1 sur la platine porte-outils 2 selon la première direction transversale T1-T1, et portant respectivement des forets 4a3, 4b3, 4c3 et 4d3, orientés selon des directions respectives de perçage IX-IX à XII-XII.

Selon une autre interprétation, le dispositif de perçage 1 comporte quatre arrangements linéaires comprenant chacun trois broches de perçage 3a1-3a3, 3b1-3b3, 3c1-3c3 et 3d1-3d3, déportés les uns par rapport aux autres à intervalle constant i2 sur la platine porte-outils 2 selon la seconde direction transversale T2-T2.

Chacune des douze broches de perçage 3a1 à 3d3 est déplaçable selon sa direction de perçage respective I-I à XII-XII grâce à des moyens pilotés de déplacement individuel par rapport à la platine porte-outils 2. Les moyens pilotés de déplacement individuel sont contrôlés par des moyens de commande 6. Des moyens de surveillance 7 surveillent l'intensité du courant d'alimentation consommé par chacune des broches de perçage 3a1 à 3d3.

Le dispositif de perçage 1 comporte également une direction moyenne de perçage M-M qui est située au centre de la matrice (ou du motif) de perçage définie par la répartition des broches de perçage 3a1 à 3d3.

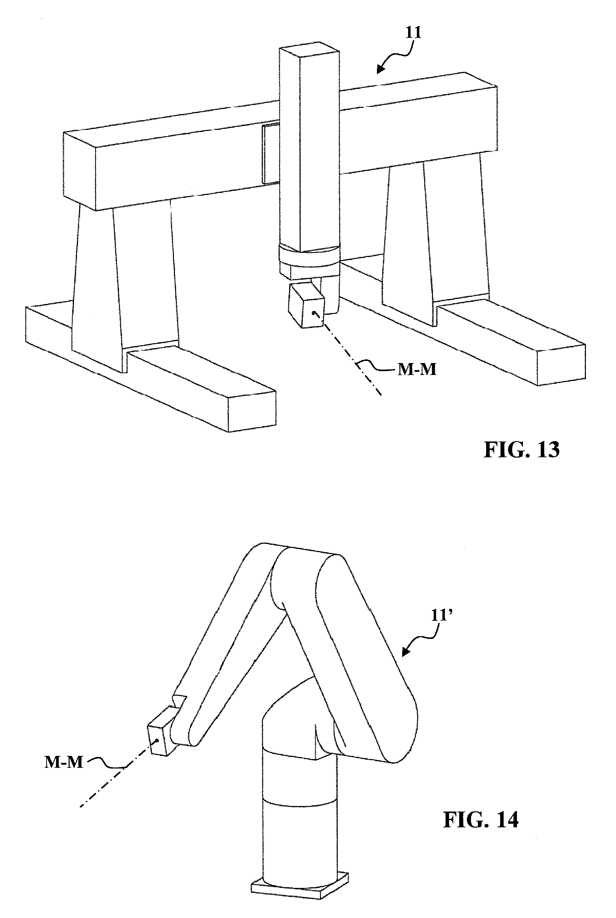

Pour assurer le déplacement de la platine porte-outils 2 par rapport à la plaque à percer lors du cycle de perçage, la platine porte-outils 2 est montée sur un porteur cartésien 11 à cinq ou six axes (figure 13) ou, en alternative, sur un porteur polaire 11' à cinq ou six axes (figures 14). Les porteurs cartésien 11 et polaire 11' sont tous les deux des machines programmables à commande numérique.

L'utilisation d'un dispositif de perçage 1 de la figure 3 va désormais être illustrée à l'aide des figures 4 à 10.

Sur la figure 4 est représentée une plaque 12 à percer, qui peut par exemple être une nacelle pour réacteur d'aéronef, et qui est réalisée en un matériau multi-couches alvéolées. La plaque 12 comporte ainsi une forme gauche avec des portions concaves et/ou convexes.

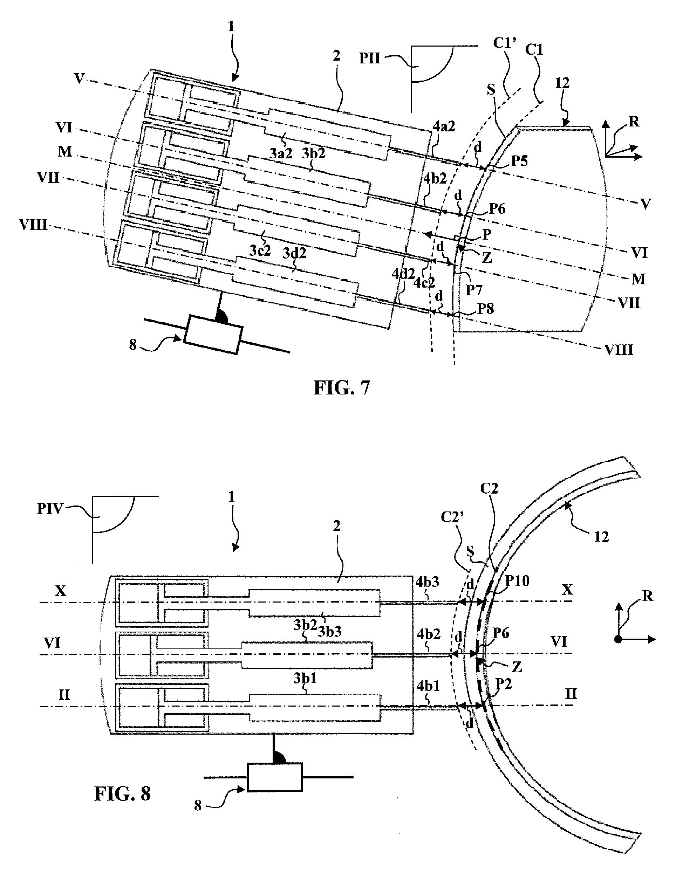

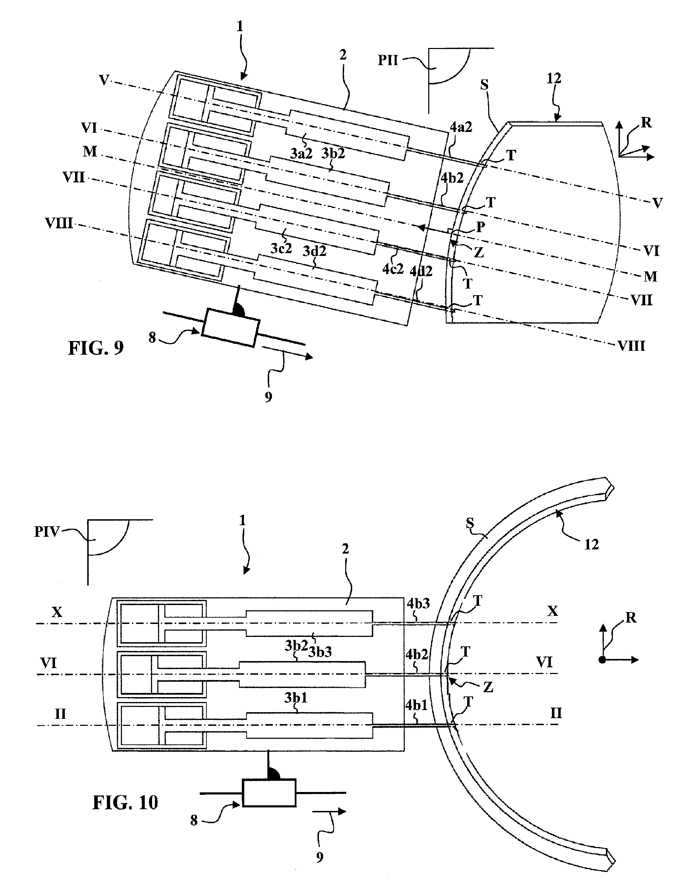

De façon générale, le procédé de perçage de la plaque 12 à l'aide du dispositif de perçage 1 comporte les étapes suivantes :
a) positionner la platine porte-outils 2 au regard d'une zone Z déterminée de la plaque 12 (figures 4 à 6),
b) déplacer par rapport à la platine porte-outils 2 chacune des broches rotatives de perçage 3a1 à 3d3 selon leur direction de perçage respective I-I à XII-XII, de façon que l'extrémité de chaque foret 4a1 à 4d3 soit située à une même distance d de son point de début de perçage P1 à P12 de la surface S de la plaque 12 (figures 7 et 8),
c) percer la plaque 12 par translation simultanée des forets 4a1 à 4d3 selon leur direction de perçage respective I-I à XII-XII (figures 9 et 10).

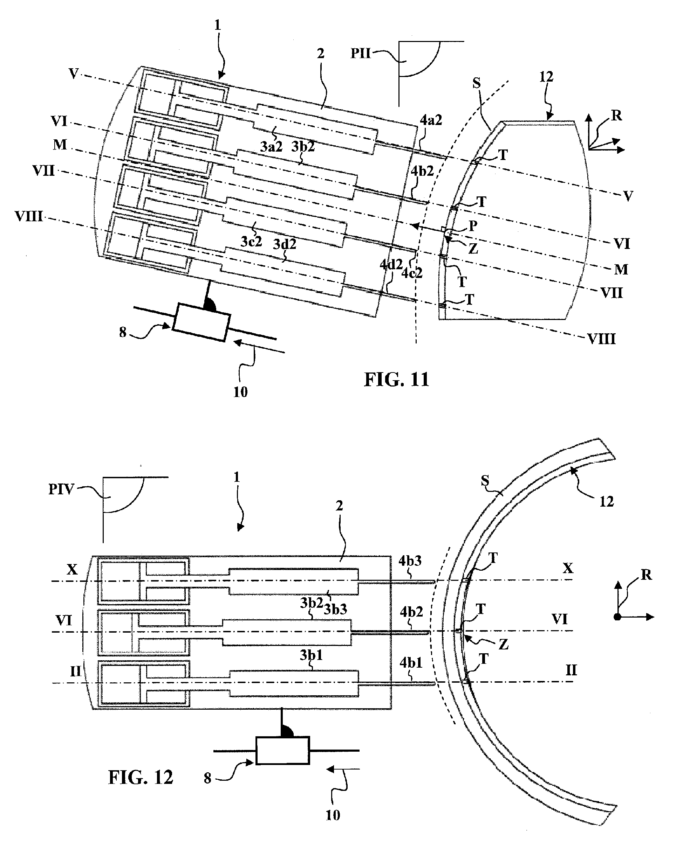

On procède ensuite à un retrait par translation simultanée des forets 4a1 à 4d3 selon leur direction de perçage respective I-I à XII-XII (figures 11 et 12), avant de réitérer les étapes a) à c) en une autre zone déterminée de la plaque 12 par un déplacement pas à pas de la platine porte-outils 2 au regard de la plaque 12, par exemple selon un schéma de déplacement similaire à celui explicité dans le document FR 2 927 271 A1.

De façon plus particulière, lors de l'étape a), la platine porte-outils 2 est orientée avec la direction moyenne de perçage M-M sensiblement perpendiculaire à la surface S de la plaque 12 en un point P de la zone Z déterminée de la plaque 12.

De façon plus détaillée, entre les étapes a) et b), on effectue les étapes intermédiaires suivantes :
a1) fournir la forme géométrique de la surface S de la plaque 12 à percer à des moyens de calcul 60 du dispositif de perçage 1,
a2) fournir aux moyens de calcul 60 du dispositif de perçage 1 la position de la plaque 12 à percer dans un référentiel R prédéterminé,
a3) fournir aux moyens de calcul 60 du dispositif de perçage 1 la position de la platine porte-outils 2 dans le référentiel R prédéterminé,
a4) calculer la position des points de début de perçage P1 à P12 de chaque foret 4a1 à 4d3, situés à l'intersection des directions de perçage I-I à XII-XII de chaque broche de perçage 3a1 à 3d3 avec la surface S de la plaque 12,
a5) à partir de la position de la platine porte-outils 2, de la position des broches de perçage 3a1 à 3d3 sur la platine porte-outils 2 et de la position des points de début de perçage P1 à P12, calculer la distance d1' à d12' séparant l'extrémité des forets 4a1 à 4d3 de leur point de début de perçage P1 à P12.

Les étapes a) à c) et a1) à a5) vont désormais être explicitées plus en détails à l'aide des figures 4 à 12 et 15 en ce qui concerne les broches 3a2, 3b2, 3c2 et 3d2 tenues dans le plan PII qui correspond au plan de la coupe représentée sur les figures 5, 7, 9 et 11, et en ce qui concerne les broches 3b1, 3b2 et 3b3 contenues dans un plan PIV qui correspond au plan de coupe des figures 6, 8, 10 et 12. Les mêmes explications s'appliquent aux broches de perçage non visibles sur les figures 4 à 12 et 15.

Lors de l'étape a), la platine porte-outils 2 est amenée en position de travail au regard d'une zone Z déterminée de la plaque 12, avec la direction moyenne de perçage M-M sensiblement perpendiculaire à la surface S en un point P de la zone Z de la plaque 12. Ce déplacement et ce positionnement sont réalisés à l'aide du porteur cartésien 11 ou du porteur polaire 11'.

A l'issue de ce positionnement, les extrémités des forets 4a2, 4b2, 4c2 et 4d2 se trouvent à des distances d5', d6', d7' et d8' différentes de leur point de début de perçage P5 à P8, et les forets 4b1 et 4b3 se trouvent à des distances d2' et d10' différentes de leur point de début de perçage P2 et P10 (figures 5 et 6).

Les distances d5', d6', d7', d8', d9' et d10' sont calculées par les moyens de calcul 60 du dispositif de perçage 1 en effectuant les étapes a1) à a5).

Subséquemment, on effectue l'étape b) lors de laquelle on déplace par rapport à la platine porte-outils 2 chacune des broches rotatives de perçage 3a2 à 3d2, 3b1 et 3b3 selon leur direction de perçage respective V-V à VIII-VIII, II-II et X-X, de façon que l'extrémité de chaque foret 4a2 à 4d2, 4b1 et 4b3 soit située à une même distance d de son point de début de perçage P5 à P8, P2 et P10 comme illustré sur les figures 7 et 8.

En pratique, les extrémités des forets 4a2 à 4d2 suivent, dans le plan PII, une courbe C1' correspondant à la courbe C1 de la surface S dans le plan PII (figure 7). Simultanément, les extrémités des forets 4b1 à 4b3 suivent, dans le plan PIV, une courbe C2' correspondant à la courbe C2 de la surface S dans le plan PIV (figure 8).

Ensuite, on perce la plaque 12 par translations simultanées des forets 4a2 à 4d2, 4b1 et 4b3, selon leurs directions de perçage respectives V-V à VIII-VIII, II-II et X-X (figures 9 et 10).

Dans le procédé illustré sur les figures 4 à 12, lors de l'étape c), le perçage est réalisé par un déplacement en translation (illustré par la flèche 9) de la platine porte-outils 2 par les moyens de déplacement linéaire 8 de la platine porte-outils 2 selon la direction moyenne de perçage M-M. Pendant ce déplacement en translation de la platine porte-outils 2, les broches de perçage 3a2 à 3d2, 3b1 et 3b3 sont maintenues fixes en position sur la platine porte-outils 2 selon leur direction de perçage V-V à VIII-VIII, II-II et X-X.

En alternative, on peut, lors de l'étape c), réaliser le perçage par un déplacement en translation de chacune des broches de perçage 3a2 à 3d2, 3b1 et 3b3 selon leurs directions de perçage respectives V-V à VIII-VIII, II-II et X-X par rapport à la platine porte-outils 2 elle-même immobile. Ce déplacement de chacune des broches de perçage 3a2 à 3d2, 3b1 et 3b3 est réalisé par les moyens pilotés de déplacement individuel.

Lors de l'étape c) de perçage, les moyens de surveillance 7 mesurent l'intensité du courant consommé par chacune des broches de perçage 3a2 à 3d2, 3b1 et 3b3. En début de perçage, l'intensité d'alimentation augmente progressivement. Lorsque les forets 4a2 à 4d2, 4b1 et 4b3 ont traversé l'épaisseur de la plaque 12, les moyens de surveillance 7 détectent une chute de l'intensité du courant consommé par les broches de perçage 3a2 à 3d2, 3b1 et 3b3. Cette chute d'intensité témoigne de la bonne réalisation de chacun des trous T dans la plaque 12, les forets traversant alors la plaque 12 de part en part.

Une fois qu'une chute d'intensité a été observée sur chacune des broches de perçage 3a2 à 3d2, 3b1 et 3b3 rotatives, un retrait des forets 4a2 à 4d2, 4b1 et 4b3 peut être effectué à l'écart de la surface S de la plaque 12.

Pour ce faire, on provoque un déplacement de la platine porte-outils 2 selon la direction moyenne de perçage M-M selon le mouvement de translation illustré par la flèche 10 sur les figures 11 et 12.

Dans le dispositif de perçage 1 selon l'invention, chacune des broches de perçage 3a1 à 3d3 rotatives étant pilotable individuellement en translation par rapport à la platine porte-outils 2, il est possible d'utiliser les moyens pilotés de déplacement individuel pour éviter de percer une zone Z' à ne pas percer de la plaque 12. Pour ce faire, entre les étapes a) et b), on effectue les étapes suivantes :
1.1) fournir la forme géométrique de la surface S de la plaque 12 à percer à des moyens de calcul 60 du dispositif de perçage 1, en identifiant les zones Z' de la plaque 12 à ne pas percer,
1.2) fournir aux moyens de calcul 60 du dispositif de perçage 1 la position de la plaque 12 à percer dans le référentiel R prédéterminé,
1.3) fournir aux moyens de calcul 60 du dispositif de perçage 1 la position de la platine porte-outils 2 dans le référentiel R prédéterminé,
1.4) calculer la position des points de début de perçage P1 à P12 de chaque foret 4a1 à 4d3, situés à l'intersection des directions de perçage I-I à XII-XII de chaque broche de perçage 3a1 à 3d3 avec la surface S de la plaque 12,
1.5) comparer les positions des points de début de perçage P1 à P12 avec les zones Z' à ne pas percer de la plaque 12 et identifier les broches de perçage 3a1 à 3d3 dont le foret 4a1 à 4d3 a un point de début de perçage P1 à P12 situé dans une zone Z' à ne pas percer de la plaque 12,
1.6) rétracter les broches de perçage 3a1 à 3d3 dont le foret 4a1 à 4d3 a un point de début de perçage P1 à P12 situé dans une zone Z' à ne pas percer de la plaque 12.

Par la suite, seuls les forets 4a1 à 4d3 non rétractés lors de l'étape 1.6) effectuent les étapes b) et c) décrites précédemment.

Une illustration des étapes 1.1) à 1.6) va désormais être explicitée à l'aide des figures 5 et 6.

Sur ces figures, la platine porte-outils 2 est positionnée au regard d'une zone Z déterminée de la plaque 12, avec la direction moyenne de perçage M-M sensiblement perpendiculaire à la surface S en un point P de ladite zone Z déterminée de la plaque 12. On effectue alors des étapes 1.1) à 1.4). On s'aperçoit alors, par exemple, que le point de début de perçage P8 est situé dans une zone Z' à ne pas percer de la plaque 12. Dans ce cas, on réalise, avec la broche de perçage 3d2, l'étape 1.6) de retrait selon un mouvement illustré par la flèche 13 : la broche de perçage 3d2 et son foret 4d2 sont déplacés à l'écart de la surface S de la plaque 12 de sorte que, lors de l'étape c), le foret 4d2 ne vient pas en contact avec la surface S de la plaque 12, de façon à laisser la zone Z' intacte (non percée).

Il est également possible, lors de la réalisation du procédé de perçage selon les étapes a) à c), de tenir compte de l'angle d'incidence des directions de perçage I-I à XII-XII de chaque broche de perçage 3a1 à 3d3 avec la surface S de la plaque 12, afin que, si cet angle d'incidence est au-delà d'un angle limite prédéterminé, le perçage ne se produise pas.

Pour ce faire, entre les étapes a) et b), on effectue les étapes suivantes :
2.1) fournir la forme géométrique de la surface S de la plaque 12 à percer aux moyens de calcul 60 du dispositif de perçage 1,
2.2) fournir aux moyens de calcul 60 du dispositif de perçage 1 la position de la plaque 12 à percer dans le référentiel R prédéterminé,
2.3) fournir aux moyens de calcul 60 du dispositif de perçage 1 la position de la platine porte-outils 2 dans le référentiel R prédéterminé,
2.4) calculer la position des points de début de perçage P1 à P12 de chaque foret 4a1 à 4d3, situés à l'intersection des directions de perçage I-I à XII-XII de chaque broche de perçage 3a1 à 3d3 avec la surface S de la plaque 12,
2.5) calculer, en chacun des points de début de perçage P1 à P12, l'angle d'incidence des directions de perçage I-I à XII-XII de chaque broche de perçage 3a1 à 3d3 avec la surface S de la plaque 12,
2.6) comparer les angles d'incidence des directions de perçage I-I à XII-XII des broches de perçage 3a1 à 3d3 avec un angle limite prédéterminé,
2.7) rétracter les broches de perçage 3a1 à 3d3 dont l'angle d'incidence est supérieur à l'angle limite prédéterminé,

Seuls les forets 4a1 à 4d3 non rétractés lors de l'étape 2.7) effectuent les étapes b) et c).

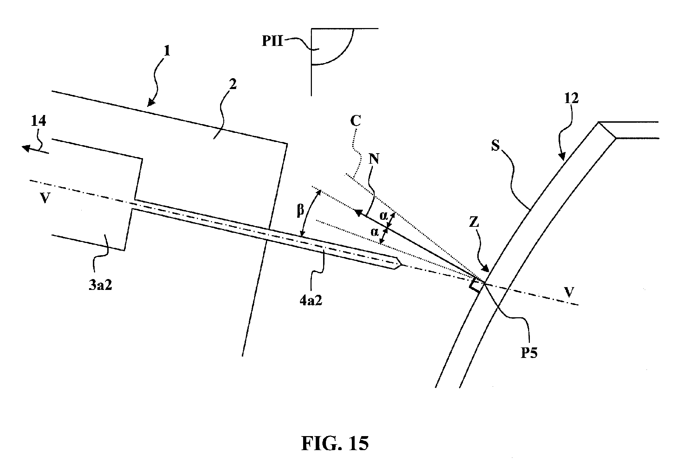

Les étapes 2.1) à 2.7) sont plus particulièrement explicitées à l'aide de la figure 15 qui est une vue de détail de la broche de perçage 3a2 de la figure 5.

Suite à la réalisation des étapes 2.1) à 2.4), on détermine la position du point de début de perçage P5 se trouvant sur la surface S de la plaque 12. Au point de début de perçage P5, la surface S se trouve localement orientée selon la normale N.

Lors de l'étape 2.5), on calcule que la direction de perçage V-V présente un angle d'incidence β sur la surface S au point P5.

Afin d'obtenir de bonnes performances d'absorption acoustiques, il est demandé que les perçages soient effectués avec un angle d'incidence β inférieur à un angle limite prédéterminé a par rapport à la normale N. En l'occurrence, sur la figure 15, on s'aperçoit que l'angle β est supérieur à l'angle limite prédéterminé α. Autrement dit, la direction de perçage V-V n'est pas contenue dans le cône C orienté selon la normale N et de demi-angle au sommet α.

Dans ces conditions, il convient de ne pas réaliser de perçage à l'aide du foret 4a2. Pour ce faire, on effectue l'étape 2.7) de retrait de la broche de perçage 3a2 à l'aide des moyens pilotés de déplacement individuel de celle-ci, en effectuant un mouvement de retrait à l'écart de la surface S de la plaque 12, mouvement illustré par la flèche 14. L'amplitude de déplacement selon le mouvement illustré par la flèche 14 est suffisante pour que, lors de l'étape c) de perçage, le foret 4a2 ne vienne pas en contact avec la surface S de la plaque 12 qui demeurera ainsi intacte (non percée) au point de début de perçage P5.

Lors du procédé explicité précédemment en lien avec les figures 4 à 10, les étapes a1 ) à a5), et le cas échéant les étapes 1.1) à 1.6) et/ou les étapes 2.1) à 2.7), sont réalisées entre les étapes a) et b), c'est-à-dire en temps réel lors du perçage physique de la plaque par le dispositif de perçage.

En alternative, les étapes a1) à a5), et le cas échéant les étapes 1.1) à 1.6) et/ou les étapes 2.1) à 2.7), peuvent être réalisées préalablement à l'étape a) à l'aide d'un logiciel de C.F.A.O. (Conception et Fabrication Assistées par Ordinateur) permettant de générer un fichier de données numériques utilisable par un dispositif de perçage à commande numérique. Grâce à ce fichier de données, le dispositif de perçage effectue, postérieurement à la simulation réalisée en C.F.A.O., l'usinage physique de la plaque en accomplissant les étapes a) à c). Le même fichier de données peut être utilisé de façon répétitive pour l'usinage d'une série de plaques identiques.

Il doit être noté que les étapes 1.1) à 1.6) et/ou 2.1) à 2.7) peuvent être effectuées de façon isolée ou simultanée lors du procédé de perçage selon les étapes a) à c), qui peut notamment comprendre la réalisation des étapes intermédiaires a1) à a5).

Il est expressément précisé que le procédé et le dispositif assurant la réalisation des étapes a), 1.1) à 1.6) et c), sans réaliser l'étape b), ne correspondent pas à l'invention mais constituent la solution d'un problème technique spécifique de garder intacte une zone Z' à ne pas percer de la plaque 12.

De la même façon, le procédé et le dispositif assurant la réalisation des étapes a), 2.1) à 2.7) et c), sans réaliser l'étape b), ne correspondent pas à l'invention mais constituent la solution d'un problème technique spécifique d'optimisation des performances d'absorption acoustique d'une plaque acoustique percée.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de perçage (1) pour le perçage d'une plaque (12), comportant une platine porte-outils (2) munie d'une pluralité de broches de perçage (3a-3d ; 3a1-3d3) rotatives à forets (4a-4d ; 4a1-4d3) orientées selon des directions de perçage (A-A - D-D ; I-I - XII-XII) parallèles à une direction moyenne de perçage (M-M), lesdites broches de perçage (3a-3d ; 3a1-3d3) étant réparties à intervalle constant (i1) sur la platine porte-outils (2) au moins selon une première direction transversale (T1-T1) pour former au moins un arrangement linéaire de broches de perçage (A1, A2, A3), le dispositif de perçage (1) comportant des moyens pilotés de déplacement individuel (5a-5d) par rapport à la platine porte-outils (2) de chacune des broches de perçage (3a-3d ; 3a1-3d3) rotatives selon leur direction de perçage (A-A - D-D ; I-I ; XII-XII) respective, **caractérisé en ce que** les moyens pilotés de déplacement individuel (5a-5d) comportent des actionneurs linéaires à positionnement continu (6a-6d).

2. Dispositif de perçage (1) selon la revendication 1, **caractérisé en ce qu'**il comporte une pluralité d'arrangements linéaires de broches de perçage (A1, A2, A3), déportés les uns par rapport aux autres à intervalle constant (i2) sur la platine porte-outils (2) selon une seconde direction transversale (T2-T2).

3. Dispositif de perçage (1) selon la revendication 2, **caractérisé en ce que** l'intervalle (i2) selon lequel sont répartis les arrangements linéaires de broches de perçage (A1, A2, A3) selon la seconde direction transversale (T2-T2), est égal à l'intervalle (i1) selon lequel sont réparties les broches de perçage (3a-3d ; 3a1-3d3) selon la première direction transversale (T1-T1) au sein de chaque arrangement linéaire de broches de perçage (A1, A2, A3).

4. Dispositif de perçage (1) selon l'une quelconque des revendications 1 à 3, **caractérisé en ce que** les moyens pilotés de déplacement individuel (5a-5d) comportent des moteurs électriques linéaires ou des vérins électriques.

5. Dispositif de perçage (1) selon l'une quelconque des revendications 1 à 4, **caractérisé en ce qu'**il comporte des moyens de surveillance (7) de l'intensité du courant électrique consommé par chacune des broches de perçage (3a-3d ; 3a1-3d3).

6. Dispositif de perçage (1) selon l'une quelconque des revendications 1 à 5, **caractérisé en ce qu'**il comporte des moyens de déplacement linéaire (8) de la platine porte-outils (2) selon la direction moyenne de perçage (M-M).

7. Dispositif de perçage (1) selon l'une quelconque des revendications 1 à 6, **caractérisé en ce que** la platine porte-outils (2) est montée sur un porteur cartésien (11) à cinq ou six axes.

8. Dispositif de perçage (1) selon l'une quelconque des revendications 1 à 6, **caractérisé en ce que** la platine porte-outils (2) est montée sur un porteur polaire (11') à cinq ou six axes.

9. Dispositif de perçage (1) selon l'une quelconque des revendications 1 à 8, **caractérisé en ce qu'**il comporte :
- des moyens d'acquisition (61) de la forme géométrique de la surface (S) de la plaque (12) à percer,
- des moyens d'acquisition (62) de la position de la plaque (12) à percer dans un référentiel (R) prédéterminé.

10. Dispositif de perçage (1) selon l'une quelconque des revendications 1 à 9, **caractérisé en ce que** les forets (4a-4d ; 4a1-4d3) des broches de perçage (3a-3d ; 3a1-3d3) ont tous une même longueur.

11. Procédé de perçage d'une plaque (12) de forme gauche à l'aide d'un dispositif de perçage (1) selon l'une quelconque des revendications 1 à 10, **caractérisé en ce qu'**il comporte les étapes suivantes :
a) positionner la platine porte-outils (2) au regard d'une zone (Z) déterminée de la plaque (12), de préférence avec la direction moyenne de perçage (M-M) sensiblement perpendiculaire à ladite zone (Z) déterminée de la plaque (12),
b) déplacer par rapport à la platine porte-outils (2) chacune des broches rotatives de perçage (3a-3d ; 3a1-3d3) selon leur direction de perçage (A-A - D-D ; I-I - XII-XII) respective, de façon que l'extrémité de chaque foret (4a-4d ; 4a1-4d3) soit située à une même distance (d) de son point de début de perçage (P1-P12) de la surface (S) de la plaque (12),
c) percer la plaque (12) par translation simultanée des forets (4a-4d ; 4a1-4d3) selon leur direction de perçage (A-A - D-D ; I-I - XII-XII) respective.

12. Procédé de perçage selon la revendication 11, **caractérisé en ce que**, entre les étapes a) et b), ou préalablement à l'étape a), on effectue les étapes suivantes :
a1) fournir la forme géométrique de la surface (S) de la plaque (12) à percer à des moyens de calcul (60) du dispositif de perçage (1),
a2) fournir aux moyens de calcul (60) du dispositif de perçage (1) la position de la plaque (12) à percer dans un référentiel (R) prédéterminé,
a3) fournir aux moyens de calcul (60) du dispositif de perçage (1) la position de la platine porte-outils (2) dans le référentiel (R) prédéterminé,
a4) calculer la position des points de début de perçage (P1-P12) de chaque foret (4a-4d ; 4a1-4d3), situés à l'intersection des directions de perçage (A-A - D-D ; I-I - XII-XII) de chaque broche de perçage (3a-3d ; 3a1-3d3) avec la surface (S) de la plaque (12),
a5) à partir de la position de la platine porte-outils (2), de la position des broches de perçage (3a-3d ; 3a1-3d3) sur la platine porte-outils (2), et de la position des points de début de perçage (P1-P12), calculer la distance (d1'-d12') séparant l'extrémité des forets (4a-4d ; 4a1-4d3) de leur point de début de perçage (P1-P12).

13. Procédé de perçage selon l'une des revendications 11 ou 12, **caractérisé en ce que** :
- entre les étapes a) et b), ou préalablement à l'étape a), on effectue les étapes suivantes :
1.1) fournir la forme géométrique de la surface (S) de la plaque (12) à percer à des moyens de calcul (60) du dispositif de perçage (1), en identifiant les zones (Z') de la plaque (12) à ne pas percer,
1.2) fournir aux moyens de calcul (60) du dispositif de perçage (1) la position de la plaque (12) à percer dans un référentiel (R) prédéterminé,
1.3) fournir aux moyens de calcul (60) du dispositif de perçage (1) la position de la platine porte-outils (2) dans le référentiel (R) prédéterminé,
1.4) calculer la position des points de début de perçage (P1-P12) de chaque foret (4a-4d ; 4a1-4d3), situés à l'intersection des directions de perçage (A-AD-D ; I-I - XII-XII) de chaque broche de perçage (3a-3d ; 3a1-3d3) avec la surface (S) de la plaque (12),
1.5) comparer les positions des points de début de perçage (P1-P12) avec les zones (Z') à ne pas percer de la plaque (12) et identifier les broches de perçage (3a-3d ; 3a1-3d3) dont le foret (4a-4d ; 4a1-4d3) a un point de début de perçage (P1-P12) situé dans une zone (Z') à ne pas percer de la plaque (12),
1.6) rétracter les broches de perçage (3a-3d ; 3a1-3d3) dont le foret (4a-4d ; 4a1-4d3) a un point de début de perçage (P1-P12) situé dans une zone (Z') à ne pas percer de la plaque (12),
- seuls les forets (4a-4d ; 4a1-4d3) non rétractés lors de l'étape 1.6) effectuent les étapes b) et c).

14. Procédé de perçage selon l'une quelconque des revendications 11 à 13, **caractérisé en ce que** :
- entre les étapes a) et b), ou préalablement à l'étape a), on effectue les étapes suivantes :
2.1) fournir la forme géométrique de la surface (S) de la plaque (12) à percer à des moyens de calcul (60) du dispositif de perçage (1),
2.2) fournir aux moyens de calcul (60) du dispositif de perçage (1) la position de la plaque (12) à percer dans un référentiel (R) prédéterminé,
2.3) fournir aux moyens de calcul (60) du dispositif de perçage (1) la position de la platine porte-outils (2) dans le référentiel (R) prédéterminé,
2.4) calculer la position des points de début de perçage (P1-P12) de chaque foret (4a-4d ; 4a1-4d3), situés à l'intersection des directions de perçage (A-AD-D ; I-I - XII-XII) de chaque broche de perçage (3a-3d ; 3a1-3d3) avec la surface (S) de la plaque (12),
2.5) calculer, en chacun des points de début de perçage (P1-P12), l'angle d'incidence (β) des directions de perçage (A-A - D-D ; I-I - XII-XII) de chaque broche de perçage (3a-3d ; 3a1-3d3) avec la surface (S) de la plaque (12),
2.6) comparer les angles d'incidence (β) des directions de perçage (A-A - D-D ; I-I - XII-XII) des broches de perçage (3a-3d ; 3a1-3d3) avec un angle limite prédéterminé (α),
2.7) rétracter les broches de perçage (3a-3d ; 3a1-3d3) dont l'angle d'incidence (β) est supérieur à l'angle limite prédéterminé (α),
- seuls les forets (4a-4d ; 4a1-4d3) non rétractés lors de l'étape 2.7) effectuent les étapes b) et c).

15. Procédé de perçage selon l'une quelconque des revendications 11 à 14, **caractérisé en ce que**, lors de l'étape c), le perçage est réalisé par un déplacement individuel en translation de chacune des broches de perçage (3a-3d ; 3a1-3d3) selon leur direction de perçage (A-A - D-D ; I-I - XII-XII) par rapport à la platine porte-outils (2).

16. Procédé de perçage selon l'une quelconque des revendications 11 à 14, **caractérisé en ce que**, lors de l'étape c), le perçage est réalisé par un déplacement en translation de la platine porte-outils (2) sur laquelle les broches de perçage (3a-3d ; 3a1-3d3) sont maintenues fixes en position selon leur direction de perçage (A-A - D-D ; I-I - XII-XII).

17. Procédé de fabrication d'un panneau acoustique multi-couches, notamment pour une nacelle d'un aéronef, **caractérisé en ce qu'**il comporte une étape de perçage, par un dispositif de perçage selon l'une quelconque des revendications 1 à 10, d'une plaque (12) comprenant au moins une couche alvéolée.

## Patentansprüche

1. Bohrvorrichtung (1) zum Bohren einer Platte (12), umfassend eine Werkzeugträgerplatte (2) mit einer Vielzahl von drehbaren Bohrspindeln (3a-3d; 3a1-3d3) mit Bohrern (4a-4d; 4a1-4d3), die in Bohrrichtungen (A-A - D-D; I-I-XII-XII) parallel zu einer mittleren Bohrrichtung (M-M) ausgerichtet sind, wobei die Bohrspindeln (3a-3d; 3a1-3d3) auf der Werkzeugträgerplatte (2) in wenigstens einer Querrichtung (T1-T1) mit konstantem Abstand (i1) zueinander verteilt sind, um wenigstens eine lineare Bohrspindel-Anordnung (A1, A2, A3) zu bilden, wobei die Bohrvorrichtung (1) gesteuerte Mittel (5a-5d) für die Einzelverschiebung relativ zu der Werkzeugträgerplatte (2) jeder der rotierenden Bohrspindeln (3a-3d; 3a1-3d3) in ihrer jeweiligen Bohrrichtung (A-A - D-D; I-I; XII-XII) hat, **dadurch gekennzeichnet, dass** die gesteuerten Mittel (5a-5d) für die Einzelverschiebung Linearantriebsorgane (6a-6d) mit stufenloser Positionierung aufweisen.

2. Bohrvorrichtung (1) nach Anspruch 1, **dadurch gekennzeichnet, dass** diese eine Mehrzahl linearer Anordnungen (A1, A2, A3) von Bohrspindeln hat, die auf der Werkzeugträgerplatte (2) mit konstantem Abstand (i2) zueinander in einer zweiten Querrichtung (T2-T2) versetzt angeordnet sind.

3. Bohrvorrichtung (1) nach Anspruch 2, **dadurch gekennzeichnet, dass** der Abstand (i2), mit dem die linearen Anordnungen (A1, A2, A3) der Bohrspindeln in der zweiten Querrichtung (T2-T2) zueinander versetzt sind, gleich dem Abstand (i1) ist, mit dem die Bohrspindeln (3a-3d; 3a1-3d3) in der ersten Querrichtung (T1-T1) innerhalb jeder linearen Anordnung (A1, A2, A3) der Bohrspindeln zueinander versetzt sind.

4. Bohrvorrichtung (1) nach einem der Ansprüche 1 bis 3, **dadurch gekennzeichnet, dass** die gesteuerten Mittel (5a-5d) für die Einzelverschiebung aus elektrischen Linearmotoren oder elektrischen Stellantrieben bestehen.

5. Bohrvorrichtungen (1) nach einem der Ansprüche 1 bis 4, **dadurch gekennzeichnet, dass** sie Mittel (7) zur Überwachung der von jeder Bohrspindel (3a-3d; 3a1-3d3) verbrauchten elektrischen Stromstärke aufweist.

6. Bohrvorrichtung (1) nach einem der Ansprüche 1 bis 5, **dadurch gekennzeichnet, dass** sie Mittel (8) zur linearen Verschiebung der Werkzeugträgerplatte (2) in der mittleren Bohrrichtung (M-M) aufweist.

7. Bohrvorrichtung (1) nach einem der Ansprüche 1 bis 6, **dadurch gekennzeichnet, dass** die Werkzeugträgerplatte (2) auf einem kartesischem Träger (11) mit fünf oder sechs Achsen gelagert ist.

8. Bohrvorrichtung (1) nach einem der Ansprüche 1 bis 6, **dadurch gekennzeichnet, dass** die Werkzeugträgerplatte (2) auf einem polaren Träger (11') mit fünf oder sechs Achsen gelagert ist.

9. Bohrvorrichtung (1) nach einem der Ansprüche 1 bis 8, **dadurch gekennzeichnet, dass** diese aufweist:
- Mittel (61) zum Erfassen der geometrischen Form der Fläche (S) der zu bohrenden Platte (12) sowie
- Mittel (62) zum Erfassen der Position der zu bohrenden Platte (12) in einem vorbestimmten Bezugssystem (R).

10. Bohrvorrichtung (1) nach einem der Ansprüche 1 bis 9, **dadurch gekennzeichnet, dass** alle Bohrer (4a-4d; 4a1-4d3) der Bohrspindeln (3a-3d, 3a1-3d3) dieselbe Länge haben.

11. Verfahren zum Bohren einer Platte (12) mit gekrümmter Form mit einer Bohrvorrichtung (1) nach einem der Ansprüche 1 bis 10, **gekennzeichnet durch** die folgenden Schritte :
a) positionieren der Werkzeugträgerplatte (2) in Bezug auf einen bestimmten Bereich (Z) der Platte (12), vorzugsweise mit der mittleren Bohrrichtung (M-M) im Wesentlichen rechtwinklig zu diesem bestimmten Bereich (Z) der Platte (12),
b) verschieben jeder der Bohrspindeln (3a-3d; 3a1-3d3) in ihrer entsprechenden Bohrrichtung (A-A - D-D; I-I - XII-XII) relativ zu der Werkzeugträgerplatte (2) derart, dass das Ende jedes Bohrers (4a-4d; 4a1-4d3) denselben Abstand (d) von dem Bohranfangspunkt (P1-P12) auf der Fläche (S) der Platte (12) hat,
c) bohren der Platte (12) **durch** gleichzeitige Translation der Bohrer (4a-4d; 4a1-4d3) in ihrer jeweiligen Bohrrichtung (A-A - D-D; I-I - XII-XII).

12. Verfahren zum Bohren nach Anspruch 11, **dadurch gekennzeichnet, dass** zwischen den Schritten a) und b) oder vor dem Schritt a) die folgenden Schritte durchgeführt werden :
a1) Eingabe der geometrischen Form der Fläche (S) der zu bohrenden Platte (12) in eine Recheneinheit (60) der Bohrvorrichtung (1),
a2) Eingabe der Position der zu bohrenden Platte (12) in einem vorbestimmten Bezugssystem (R) in die Recheneinheit (60) der Bohrvorrichtung (1),
a3) Eingabe der Position der Werkzeugträgerplatte (2) in dem vorbestimmten Bezugssystem (R) in die Recheneinheit (60) der Bohrvorrichtung (1),
a4) berechnen der Position der Bohranfangspunkte (P1-P12) jedes Bohrers (4a-4d; 4a1-4d3), die im Schnittpunkt der Bohrrichtungen (A-A - D-D; I-I - XII-XII) jeder Bohrspindel (3a-3d; 3a1-3d3) mit der Fläche (S) der Platte (12) liegen,
a5) ausgehend von der Position der Werkzeugträgerplatte (2), der Position der Bohrspindeln (3a-3d; 3a1-3d3) auf der Werkzeugträgerplatte (2) und der Position der Bohranfangspunkte (P1-P12) berechnen des Abstandes (d1'-d12'), der das Ende der Bohrer (4a-4d; 4a1-4d3) von ihrem Bohranfangspunkt (P1-P12) trennt.

13. Verfahren zum Bohren nach Anspruch 11 oder 12, **dadurch gekennzeichnet, dass** :
- zwischen den Schritten a) und b) oder vor dem Schritt a) die folgenden Schritte durchgeführt werden :
1.1) Eingabe der geometrischen Form der Fläche (S) der zu bohrenden Platte (12) in die Recheneinheit (60) der Bohrvorrichtung (1), wozu die Bereiche (Z') der Platte (12) festgelegt werden, die nicht gebohrt werden sollen,
1.2) Eingabe der Position der in einem vorbestimmten Bezugssystem (R) zu bohrenden Platte (12) in die Recheneinheit (60) der Bohrvorrichtung (1),
1.3) Eingabe der Position der Werkzeugträgerplatte (2) in dem vorbestimmten Bezugssystem (R) in die Recheneinheit (60) der Bohrvorrichtung (1),
1.4) berechnen der Position der Bohranfangspunkte (P1-P12) jedes Bohrers (4a-4d; 4a1-4d3), die sich im Schnittpunkt der Bohrrichtungen (A-A - D-D; I-I - XII-XII) jeder Bohrspindel (3a-3d; 3a1-3d3) mit der Fläche (S) der Platte (12) befinden,
1.5) Vergleich der Positionen der Bohranfangspunkte (P1-P12) mit den nicht zu bohrenden Bereichen (Z') der Platte (12) und Festlegen der Bohrspindeln (3a-3d; 3a1-3d3), deren Bohrer (4a-4d; 4a1-4d3) einen Bohranfangspunkt (P1-P12) hat, der sich in dem nicht zu bohrenden Bereich (Z') der Platte (12) befindet,
1.6) zurückziehen der Bohrspindeln (3a-3d; 3a1-3d3), deren Bohrer (4a-4d; 4a1-4d3) einen Bohranfangspunkt (P1-P12) hat, der in einem nicht zu bohrenden Bereich (Z') der Platte (12) liegt,
- wobei nur die nicht zu zurückgezogenen Bohrer (4a-4d; 4a1-4d3) während des Schrittes 1.6) die Schritte b) und c) durchführen.

14. Verfahren zum Bohren nach einem der Ansprüche 11 bis 13, **dadurch gekennzeichnet, dass** :
- zwischen den Schritten a) und b) oder vor dem Schritt a) die folgenden Schritte durchgeführt werden :
2.1) Eingabe der geometrischen Form der Fläche (S) der zu bohrenden Platte (12) in die Recheneinheit (60) der Bohrvorrichtung (1),
2.2) Eingabe der Position der zu bohrenden Platte (12) in einem vorbestimmten Bezugssystem (R) in die Recheneinheit (60) der Bohrvorrichtung (1),
2.3) Eingabe der Position der Werkzeugträgerplatte (2) in dem vorbestimmten Bezugssystem (R) in die Recheneinheit (60) der Bohrvorrichtung (1),
2.4) berechnen der Position der Bohranfangspunkte (P1-P12) jedes Bohrers (4a-4d; 4a1-4d3), die sich im Schnittpunkt der Bohrrichtungen (A-A - D-D; I-I - XII-XII) jeder Bohrspindel (3a-3d; 3a1-3d3) mit der Fläche (S) der Platte (12) befinden,
2.5) berechnen für jeden Bohranfangspunkt (P1-P12) den Anstellwinkel (β) der Bohrrichtungen (A-A - D-D; I-I - XII-XII) jeder Bohrspindel (3a-3d; 3a1-3d3) mit der Fläche (S) der Platte (12),
2.6) Vergleich der Anstellwinkel (β) der Bohrrichtungen (A-A - D-D; I-I - XII-XII) der Bohrspindeln (3a-3d; 3a1-3d3) mit einem vorbestimmten Grenzwinkel (α),
2.7) zurückziehen der Bohrspindeln (3a-3d; 3a1-3d3), deren Anstellwinkel (β) größer als der vorbestimmte Grenzwinkel (α) ist,
- wobei nur die im Schritt 2.7) nicht zurückgezogenen Bohrer (4a-4d; 4a1-4d3) die Schritte b) und c) durchführen.

15. Verfahren zum Bohren nach einem der Ansprüche 11 bis 14, **dadurch gekennzeichnet, dass** in dem Schritt c) die Bohrung durchgeführt wird durch eine individuelle Translationsverschiebung jeder Bohrspindel (3a-3d; 3a1-3d3) in ihrer Bohrrichtung (A-A - D-D; I-I - XII-XII) relativ zu der Werkzeugträgerplatte (2).

16. Verfahren zum Bohren nach einem der Ansprüche 11 bis 14, **dadurch gekennzeichnet, dass** in dem Schritt c) die Bohrung durchgeführt wird durch eine Translationsverschiebung der Werkzeugträgerplatte (2), auf der die Bohrspindeln (3a-3d; 3a1-3d3) in einer festen Stellung bezüglich ihrer Bohrrichtung (A-A - D-D; I-I - XII-XII) gehalten werden.

17. Verfahren zum Herstellen einer mehrlagigen Schallschluckplatte, insbesondere für eine Triebwerksgondel eines Flugzeugs, **dadurch gekennzeichnet, dass** in einem Bohrschritt mittels einer Bohrvorrichtung nach einem der Ansprüche 1 bis 10 eine Platte (12) mit wenigstens einer wabenförmigen Lage gebohrt wird.

## Claims

1. Drilling device (1) for drilling a sheet (12), comprising a tool-holder plate (2) provided with a plurality of rotary drill spindles (3a-3d; 3a1-3d3) with bits (4a-4d; 4a1-4d3) oriented in drilling directions (A-A - D-D; I-I - XII-XII) parallel to a mean drilling direction (M-M), said drill spindles (3a-3d; 3a1-3d3) being distributed at constant intervals (i1) over the tool-holder plate (2) at least in a first transverse direction (T1-T1) to form at least one linear arrangement of drill spindles (A1, A2, A3), the drilling device (1) comprising controlled individual displacement means (5a-5d) for displacing, relative to the tool-holder plate (2), each of the rotary drill spindles (3a-3d; 3a1-3d3) in their respective drilling direction (A-A - D-D; I-I; XII-XII), **characterised in that** the controlled individual displacement means (5a-5d) comprise linear actuators with continuous positioning (6a-6d).

2. Drilling device (1) according to claim 1, **characterised in that** it comprises a plurality of linear arrangements of drill spindles (A1, A2, A3), separated from one another at constant intervals (i2) over the tool-holder plate (2) in a second transverse direction (T2-T2).

3. Drilling device (1) according to claim 2, **characterised in that** the interval (i2) according to which the linear arrangements of drill spindles (A1, A2, A3) are distributed in the second transverse direction (T2-T2) is equal to the interval (i1) according to which the drill spindles (3a-3d; 3a1-3d3) are distributed in the first transverse direction (T1-T1), within each linear arrangement of drill spindles (A1, A2, A3).

4. Drilling device (1) according to any one of claims 1 to 3, **characterised in that** the controlled individual displacement means (5a-5d) comprise linear electric motors or electric cylinders.

5. Drilling device (1) according to any one of claims 1 to 4, **characterised in that** it comprises means (7) for monitoring the intensity of the electric current consumed by each of the drill spindles (3a-3d; 3a1-3d3).

6. Drilling device (1) according to any one of claims 1 to 5, **characterised in that** it comprises linear displacement means (8) for displacing the tool-holder plate (2) in the mean drilling direction (M-M).

7. Drilling device (1) according to any one of claims 1 to 6, **characterised in that** the tool-holder plate (2) is mounted on a five- or six-axis Cartesian support device (11).

8. Drilling device (1) according to any one of claims 1 to 6, **characterised in that** the tool-holder plate (2) is mounted on a five- or six-axis polar support device (11').

9. Drilling device (1) according to any one of claims 1 to 8, **characterised in that** it comprises:
- means (61) for acquiring the geometrical form of the surface (S) of the sheet (12) to be drilled,
- means (62) for acquiring the position of the sheet (12) to be drilled in a predetermined reference frame (R).

10. Drilling device (1) according to any one of claims 1 to 9, **characterised in that** the bits (4a-4d; 4a1-4d3) of the drill spindles (3a-3d; 3a1-3d3) all have the same length.

11. Method for drilling a sheet (12) of awkward from using a drilling device (1) according to any one of claims 1 to 10, **characterised in that** it comprises the following steps:
a) positioning the tool-holder plate (2) facing a determined zone (Z) of the sheet (12), preferably with the mean drilling direction (M-M) substantially at right angles to said determined zone (Z) of the sheet (12),
b) displacing, relative to the tool-holder plate (2), each of the rotary drill spindles (3a-3d; 3a1-3d3) in their respective drilling direction (A-A - D-D; I-I - XII-XII), so that the end of each bit (4a-4d; 4a1-4d3) is situated at the same distance (d) from its drilling start point (P1-P12) on the surface (S) of the sheet (12),
c) drilling the sheet (12) by simultaneous translation of the bits (4a-4d; 4a1-4d3) in their respective drilling direction (A-A - D-D; I-I - XII-XII).

12. Drilling method according to claim 11, **characterised in that**, between the steps a) and b), or prior to the step a), the following steps are carried out:
a1) providing the geometrical form of the surface (S) of the sheet (12) to be drilled to computation means (60) of the drilling device (1),
a2) providing the computation means (60) of the drilling device (1) with the position of the sheet (12) to be drilled in a predetermined reference frame (R),
a3) providing the computation means (60) of the drilling device (1) with the position of the tool-holder plate (2) in the predetermined reference frame (R),
a4) computing the position of the drilling start points (P1-P12) of each bit (4a-4d; 4a1-4d3), situated at the intersection of the drilling directions (A-A - D-D; I-I - XII-XII) of each drill spindle (3a-3d; 3a1-3d3) with the surface (S) of the sheet (12),
a5) from the position of the tool-holder plate (2), the position of the drill spindles (3a-3d; 3a1-3d3) on the tool-holder plate (2), and the position of the drilling start points (P1-P12), computing the distance (d1'-d12') separating the end of the drill bits (4a-4d; 4a1-4d3) from their drilling start point (P1-P12).

13. Drilling method according to one of claims 11 or 12, **characterised in that**:
- between the steps a) and b), or prior to the step a), the following steps are carried out:
1.1) providing the geometrical form of the surface (S) of the sheet (12) to be drilled to computation means (60) of the drilling device (1), by identifying the zones (Z') of the plate (12) not to be drilled,
1.2) providing the computation means (60) of the drilling device (1) with the position of the sheet (12) to be drilled in a predetermined reference frame (R),
1.3) providing the computation means (60) of the drilling device (1) with the position of the tool-holder plate (2) in the predetermined reference frame (R),
1.4) computing the position of the drilling start points (P1-P12) of each bit (4a-4d; 4a1-4d3), situated at the intersection of the drilling directions (A-A - D-D; I-I - XII-XII) of each drill spindle (3a-3d; 3a1-3d3) with the surface (S) of the sheet (12),
1.5) comparing the positions of the drilling start points (P1-P12) with the zones (Z') not to be drilled of the sheet (12) and identifying the drill spindles (3a-3d; 3a1-3d3) for which the bit (4a-4d; 4a1-4d3) has a drilling start point (P1-P12) situated in a zone (Z') not to be drilled of the sheet (12),
1.6) retracting the drill spindles (3a-3d; 3a1-3d3) for which the bit (4a-4d; 4a1-4d3) has a drilling start point (P1-P12) situated in a zone (Z') not to be drilled of the sheet (12),
- only the bits (4a-4d; 4a1-4d3) not retracted in the step 1.6) perform the steps b) and c).

14. Drilling method according to any one of claims 11 to 13, **characterised in that**:
- between the steps a) and b), or prior to the step a), the following steps are carried out:
2.1) providing the geometrical form of the surface (S) of the sheet (12) to be drilled to computation means (60) of the drilling device (1),
2.2) providing the computation means (60) of the drilling device (1) with the position of the sheet (12) to be drilled in a predetermined reference frame (R),
2.3) providing the computation means (60) of the drilling device (1) with the position of the tool-holder plate (2) in the predetermined reference frame (R),
2.4) computing the position of the drilling start points (P1-P12) of each bit (4a-4d; 4a1-4d3), situated at the intersection of the drilling directions (A-A - D-D; I-I - XII-XII) of each drill spindle (3a-3d; 3a1-3d3) with the surface (S) of the sheet (12),
2.5) computing, at each of the drilling start points (P1-P12), the angle of incidence (β) of the drilling directions (A-A - D-D; I-I - XII-XII) of each drill spindle (3a-3d; 3a1-3d3) with the surface (S) of the sheet (12),
2.6) comparing the angles of incidence (β) of the drilling directions (A-A - D-D; I-I - XII-XII) of the drill spindles (3a-3d; 3a1-3d3) with a predetermined limit angle (α),
2.7) retracting the drill spindles (3a-3d; 3a1-3d3) for which the angle of incidence (β) is greater than the predetermined limit angle (α),
- only the bits (4a-4d; 4a1-4d3) not retracted in the step 2.7) perform the steps b) and c).

15. Drilling method according to any one of claims 11 to 14, **characterised in that**, in the step c), the drilling is performed by an individual translational displacement of each of the drill spindles (3a-3d; 3a1-3d3) in their drilling direction (A-A - D-D; I-I - XII-XII) relative to the tool-holder plate (2).

16. Drilling method according to any one of claims 11 to 14, **characterised in that**, in the step c), the drilling is performed by a translational displacement of the tool-holder plate (2) on which the drill spindles (3a-3d; 3a1-3d3) are held fixed in position in their drilling direction (A-A - D-D; I-I - XII-XII).

17. Method for manufacturing a multilayer acoustic panel, notably for a nacelle of an aircraft, **characterised in that** it comprises a step of drilling, by a drilling device according to any one of claims 1 to 10, a sheet (12) comprising at least one cellular layer.
